# EUROPEAN PATENT APPLICATION

(11) **EP 4 807 703 A1**
(43) Date of publication of application: **16.09.2026**
(21) Application number: 25162574.5
(22) Date of filing: 10.03.2025
(51) Int. Cl.: G07C 9/00, G06F 21/72, G06F 21/74, B60R 25/24

(54) **A KEY FOB**

(71) Applicant: NXP B.V., 5656 AG Eindhoven (NL)
(72) Inventor: MANNINGER, Marc, 5656 AG Eindhoven (NL); HASLINGER, Dorian, 5656 AG Eindhoven (NL); KHULLAR, Naman, 5656 AG Eindhoven (NL)
(74) Representative: Krott, Michel

(57) **Abstract**

The present disclosure relates to a key fob for accessing a vehicle, wherein the key fob comprises: a secure element comprising: a microcontroller unit; a non-volatile memory module communicably coupled to the microcontroller unit, the non-volatile memory module configured to store a first system software for running a first vehicle access application and a second system software for running a second vehicle access application; and one or more secure hardware blocks communicably coupled with the microcontroller unit; wherein the key fob is configured to operate in a first mode or second mode, wherein, in the first mode, the microcontroller unit is configured to: activate the secure hardware blocks; operate at a first clock speed; and boot the first system software; and in the second mode, the microcontroller unit is configured to: inhibit activation of one or more of the secure hardware blocks and/or operate at a second clock speed that is lower than the first clock speed; and boot the second system software.

## Description

### Field

The present disclosure relates to a key fob for accessing a vehicle. In particular, the present disclosure relates to a key fob which can be configured to operate using one of a plurality of vehicle access technologies.

### Summary

According to a first aspect of the present disclosure there is provided a key fob for accessing a vehicle, wherein the key fob comprises:
a secure element comprising:
   a microcontroller unit;
   a non-volatile memory module communicably coupled to the microcontroller unit, the non-volatile memory module configured to store a first system software for running a first vehicle access application and a second system software for running a second vehicle access application; and
   one or more secure hardware blocks communicably coupled
with the microcontroller unit;

wherein the key fob is configured to operate in a first mode or second mode, wherein, in the first mode, the microcontroller unit is configured to:
   activate the secure hardware blocks;
   operate at a first clock speed; and
   boot the first system software; and
in the second mode, the microcontroller unit is configured to:
   inhibit activation of one or more of the secure hardware blocks and/or operate at a second clock speed that is lower than the first clock speed; and
   boot the second system software.

In one or more embodiments, in the first mode, the microcontroller unit is configured to activate the secure hardware blocks with first settings and, in the second mode, the microcontroller unit is further configured to activate one or more of the uninhibited secure hardware blocks with second settings that are different to the first settings.

In one or more embodiments, the first system software is an operating system configured to run a smart vehicle access application, and the second system software is firmware configured to run a low frequency, LF, vehicle access application.

In one or more embodiments, the non-volatile memory module is further configured to store a third system software for running a third application and the key fob is further configured to operate in a third mode, wherein, in the third mode, the microcontroller unit is configured to activate the secure hardware blocks, operate at a third clock speed, and boot a third system software.

In one or more embodiments, the key fob further comprises:
first host circuitry configured to communicate with the vehicle using a first vehicle access protocol;
second host circuitry configured to communicate with the vehicle using a second vehicle access protocol different from the first vehicle access protocol;
wherein, in the first mode, the first system software communicates with the first host circuitry over a first communication interface and, in the second mode, the second system software communicates with the second host circuitry over a second communication interface different from the first communication interface.

In one or more embodiments, the first host circuitry is configured to communicate with the vehicle using one or more of near field communication, NFC, Bluetooth Low Energy, BLE, and ultra-wideband, UWB, and the second host circuitry is configured to communicate with the vehicle using low frequency, LF, signals.

In one or more embodiments, the secure element further comprises a first communication interface driver configured to facilitate communication over the first communication interface and a second communication interface driver configured to facilitate communication over the second communication interface, the first and second communication interface drivers being communicably coupled to the microcontroller unit, wherein in the first mode the microcontroller unit is configured to activate the first communication interface driver and in the second mode the microcontroller unit is configured to activate the second communication interface driver.

In one or more embodiments, first communication interface comprises one of an I2C interface and an NFC interface and the second communication interface comprises an SPI interface.

In one or more embodiments, the first host circuitry comprises one or more of smartphone-based vehicle access host software, UWB ranging software, and NFC terminal software and the second host circuitry comprises low frequency, LF, car access host software.

In one or more embodiments, the key fob is configured to receive a signal which sets one of the first mode or the second mode as a default mode.

In one or more embodiments, the non-volatile memory module comprises a single non-volatile memory unit configured to store the first system software in a first secure memory area and the second system software in a second secure memory area.

In one or more embodiments, the first secure memory area and the second secure memory area are separated by a firewall.

In one or more embodiments, the non-volatile memory module comprises a first non-volatile memory unit for storing the first system software and a second non-volatile memory unit for storing the second system software.

In one or more embodiments, the secure hardware blocks comprise one or more of: a cyclic redundancy check, CRC, block, a true random number generator, TRNG, block, a cryptographical block, and a watchdog timer block.

In one or more embodiments, the secure element further comprises a RAM module and, in the second mode, the microcontroller is configured to limit the amount of RAM available to the second system software.

While the disclosure is amenable to various modifications and alternative forms, specifics thereof have been shown by way of example in the drawings and will be described in detail. It should be understood, however, that other embodiments, beyond the particular embodiments described, are possible as well. All modifications, equivalents, and alternative embodiments falling within the spirit and scope of the appended claims are covered as well.

The above discussion is not intended to represent every example embodiment or every implementation within the scope of the current or future Claim sets. The figures and Detailed Description that follow also exemplify various example embodiments. Various example embodiments may be more completely understood in consideration of the following Detailed Description in connection with the accompanying Drawings.

### Brief Description of the Drawings

One or more embodiments will now be described by way of example only with reference to the accompanying drawings in which:
Figure 1a is a block diagram illustrating an example of a key fob that operates using low-frequency RFID technology;
Figure 1b is a block diagram illustrating an example of a key fob that operates using smart technology;
Figure 2 is a schematic diagram illustrating a multi-OS secure element for a key fob for accessing a vehicle in accordance with the present disclosure;
Figure 3 is a block diagram illustrating a key fob comprising an example multi-OS secure element; and
Figure 4 is a block diagram illustrating another example of a multi-OS secure element for a key fob.

### Detailed Description

Modern vehicle key fobs typically rely on a secure element (SE) to provide secure processing, memory, and cryptographic operations. The automotive industry utilises a plurality of vehicle access technologies in cars and key fobs, with each technology offering its own unique benefits. Examples of technologies used in modern vehicle key fobs include classic car access technologies, such as Low-Frequency (LF), and smart access technologies which may include Ultra-Wideband (UWB), Bluetooth Low Energy (BLE), and/or Near-Field Communication (NFC). The following acronyms will appear throughout the specification:
SE - secure element
LF - Low-Frequency
UWB - Ultra-Wideband
BLE - Bluetooth Low Energy
OS - Operating System
IC - Integrated circuit
MCU - Microcontroller Unit
CCC - car connectivity consortium
CCC DK - car connectivity consortium digital key
OEM - Original Equipment Manufacturers
SPI - Serial Peripheral Interface
JCOP - JavaCard Open Platform

The requirements of a secure element vary depending on its application. For example, the requirements for a secure element providing car-side smart access are very different to the requirements for a secure element in a key fob. As another example, the requirements of a secure element in a key fob can vary depending on the type of vehicle access technology that the key fob operates. For example, for a smartphone-based vehicle access fob (for example, a car connectivity consortium digital key (CCC DK) smart fob) using Bluetooth Low Energy, Ultra-Wideband, and/or Near-Field Communication, the requirements of the secure element are different to a classical LF-based key fob. In an LF key fob, the secure element is powered either by the coin cell battery or by the LF chip when the coin cell battery is empty. This leads to strict performance and current consumption requirements for the secure element, often leading to the use of a "native" OS SE. In a typical smart fob (utilizing UWB, BLE and/or NFC technology), the secure element is already optimized for the powered by the field NFC use case but due to the standardized CCC protocol the JavaCard based OS is more flexible and often required.

Today, communicating with a vehicle using classic car access technologies, such as low frequency RFID, or "LF", technology, and communicating with a vehicle using smart vehicle access technologies, such as NFC, BLE, and UWB, requires different, separate key fobs. Original Equipment Manufacturers (OEMs) may maintain more than one different key fob system (for example, classic LF car access system & smart access system) for multiple car models. This is inefficient and costly (HW/SW/Validation/etc.). If only one OS, e.g., a native OS is supported, standardized features like OS or applet update in the field (e.g., as standardized in GlobalPlatform, Amendment H) are hard to manage.

It has been recognised by the inventors that the different types of key fob technology have very different technological requirements when operating on a key fob, and this has been a barrier in bringing a plurality of vehicle access technologies to a single configurable key fob. Advantageously, a key fob according to the present disclosure enables running multiple car access concepts and protocols on the same secure element. Therefore, the same key fob can be used for accessing different cars with different technologies and vehicle OEMs can develop one single key fob for all their different platforms/car models as it is independent of whether the car uses classic LF or smart access technologies on the car side. That is, the same key fob can be used for multiple cars, independent of whether the car uses smart access technologies only (UWB, BLE, NFC) or classic car access technologies (LF), providing flexibility to the key fob manufacturer because even with varying application requirements the same secure element hardware can be used. This results in reduced research and development and system validation costs and reduced overall complexity for OEMs and their suppliers.

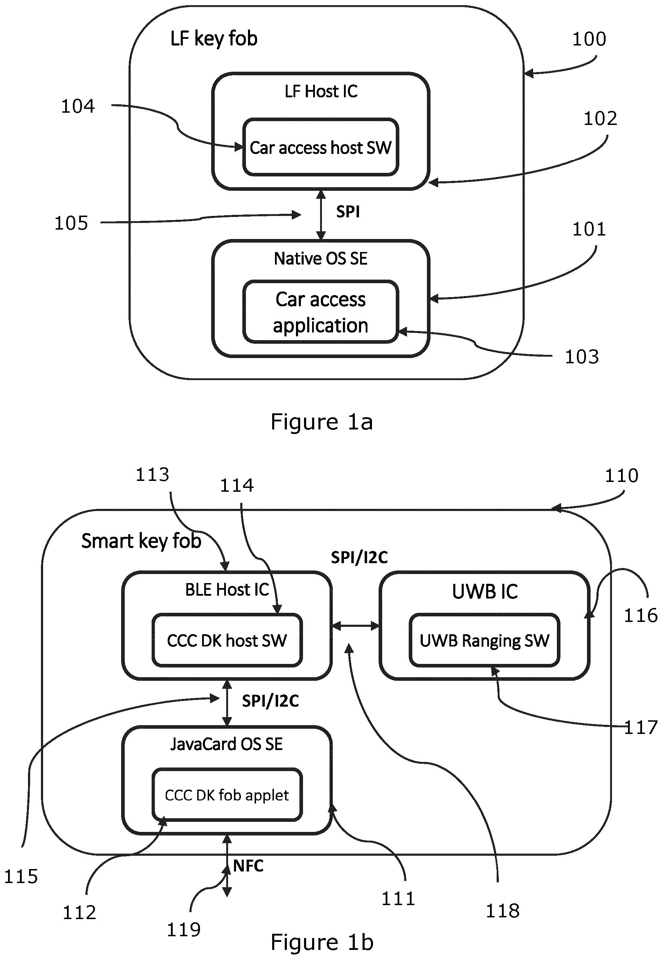

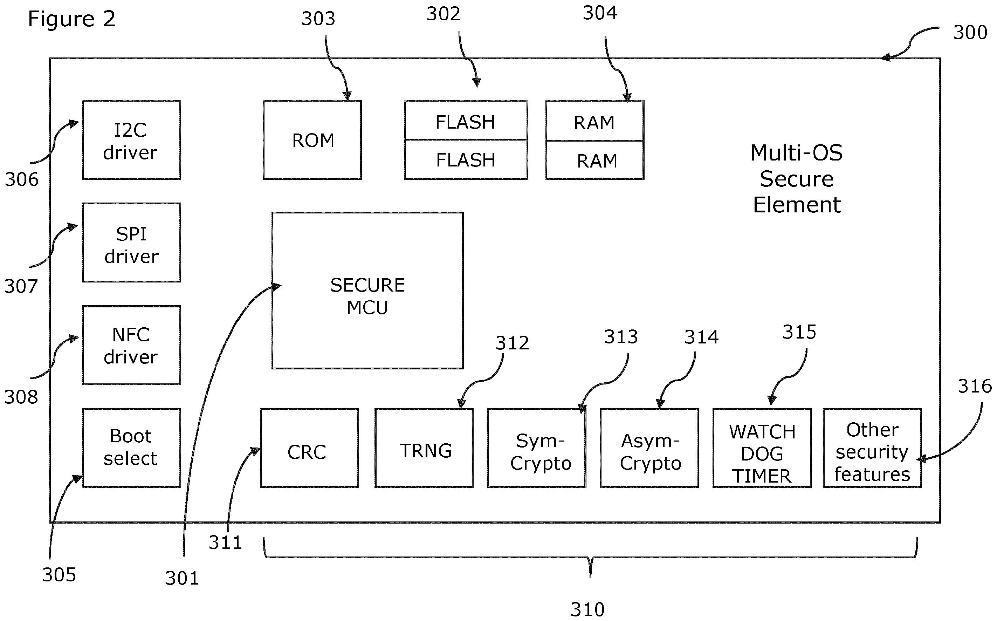

Figure 1a is a block diagram illustrating an example of a key fob that operates using low-frequency RFID technology, which will hereafter be referred to as an LF key fob 100. The LF key fob 100 is associated with a vehicle. The LF key fob 100 includes a "native OS" secure element 101. The native OS secure element may be defined as a secure element that includes a built-in, i.e. "native", operating system which runs on the secure element 101. For reasons that will be discussed further with reference to Figure 2 below, this "native OS" may be a simple state machine or a simple operating system. The native OS secure element may also be defined as a secure element including an operating system or firmware written in a low-level coding language, such as C.

The secure element 101 is tamper-resistant and provides secure processing, memory, and cryptographic operations. For example, the secure element 101 may store sensitive data such as cryptographic keys, authentication credentials, and/or digital certificates. The secure element 101 may further perform various cryptographic operations such as encryption and decryption to ensure secure communication between the key fob 100 and the vehicle.

The secure element 101 stores a vehicle access application 103 which runs on the native OS and provides secure access to a vehicle, for example by managing authentication and encryption processes between the key fob and the vehicle. The vehicle access application 103 generally provides basic functionality needed, including providing support in the case that the battery that powers the key fob runs out, by causing the system to be powered by the LF field generated by the vehicle (approximately 200µA charging current is available for the secure element).

The LF key fob 100 also includes a host integrated circuit, hereafter referred to as an LF host IC 102. The secure element 101 and the LF host IC 102 communicate over an SPI interface 105. The LF host IC 102 manages communication between the key fob and the vehicle. The LF host IC 102 includes vehicle access host software 104 which manages sending and receiving of signals to and from the car to perform various actions, such as locking or unlocking the doors and/or starting the engine.

Figure 1b is a block diagram illustrating an example of a key fob that operates using smart technology, which will hereafter be referred to as a smart key fob 110. The smart key fob 110 is associated with a vehicle. In this example, the smart key fob 110 includes a "JavaCard OS" secure element 111. The JavaCard OS secure element 111 is a secure element including a JavaCard operating system which runs on the secure element. In other examples, the smart key fob 110 may include a JavaCard Open Platform, JCOP, OS secure element. More generally, a secure element of a smart key fob such as the smart key fob 110 in this example may be defined as a secure element including an operating system having a runtime environment, i.e. using a Java or JavaCard-based OS.

The secure element 111 is tamper-resistant and provides secure processing, memory, and cryptographic operations. For example, the secure element 111 may store sensitive data such as cryptographic keys, authentication credentials, and/or digital certificates. The secure element 111 may further perform various cryptographic operations such as encryption and decryption to ensure secure communication between the key fob and a vehicle. The secure element 111 stores a smartphone-based vehicle access fob applet 112 (such as a car connectivity consortium digital key, CCC DK, fob applet, as pictured) which runs on the JavaCard OS and provides secure access to a vehicle. The smartphone-based vehicle access fob applet 112 is a more complex application than the car access application 103 that runs on the native OS secure element 101 of the LF key fob 100 shown in Figure 1a. In the smartphone-based vehicle access fob applet 112, back up is performed via NFC, and in case of battery empty the system will be powered by NFC provided to the secure element 111 via an NFC interface 119.

The smart key fob 110 further includes a Bluetooth Low Energy (BLE) host integrated circuit 113, hereafter referred to as a BLE host IC 113. The secure element 111 and the BLE host IC 113 communicate over an interface 115 which may use the SPI protocol or the I2C protocol. The BLE host IC 113 includes a smartphone-based vehicle access application, which in this example is CCC DK host software 114, enabling secure communication between the smart key fob and a vehicle using BLE.

The smart key fob 110 further includes an Ultra-Wideband integrated circuit 116, hereafter referred to as a UWB IC 116. The UWB IC 116 stores UWB ranging software 117 which provides accurate distance measurements between the smart key fob 110 and the vehicle, which can facilitate secure hands-free access to the vehicle. The BLE host IC 113 communicates with the UWB IC 116 via an interface 118 which may be an SPI or an I2C interface.

As discussed above, different types of key fob technology have very different technological requirements when operating on a key fob. A key fob that uses a "native OS" secure element, similar to the native OS secure element described above with reference to the LF key fob of Figure 1a, requires less power than the smart key fob using a smart OS secure element similar to the smart OS secure element described above with reference to the smart key fob of Figure 1b. For example, a typical LF key fob secure element will have a low power budget - an LF key fob is typically powered by an LF field which charges a buffer capacitor with approximately 200 microamps current and up to 3V.

Furthermore, operations on a native OS secure element are typically executed faster to be able to archive power requirements - approximately 10ms for key generation and EEPROM write - whereas on the smart OS secure element the transaction times are approximately 100ms. The native OS of the LF key fob which runs the vehicle access application is a more "simple" operating system compared to that of the smart OS. That is, the native OS may be a simple state machine, firmware, or a "scaled-back" operating system. In contrast, the smart key fob secure element requires a more complete operating system such as a JavaCard-based OS to support its operations.

The native OS secure element requires access to fewer hardware modules than the smart OS secure element to perform its functionality, as will be detailed below with reference to Figure 2. The smart OS requires full hardware access and a symmetric cryptographic coprocessor is needed. The native OS secure element also has controlled and limited memory access with no flash wear levelling, whereas the smart OS secure element requires high memory write cycle and file systems.

This information is summarised in the following table:

| **Operation Mode "Native OS" Classic Car Access** | **Operation Mode "smart" access (e.g. "CCC DK")** |
|---|---|
| Very low power budget | Powered by NFC or Coin Cell battery (budget up 15mA peak) |
| - Powered by LF field which is charging a buffer cap with ~200µA up to ~3V | |
| Fast operation needed to be able to archive power requirements | Transaction time of ~100ms |
| - 10ms max on time for key generation and EEPROM write | |
| Basic state machine design NO OS | Full OS such as a JavaCard-based OS (such as JCOP) |
| Limited HW access required only (activated only subset to reduce current consumption and timing optimized) | Full HW access required SBC / Fame needed |
| Controlled and limited memory access (look up table design), NO Flash wear leveling. Only anti tearing. | High memory write cycle needed. File systems etc. used. |

Figure 2 is a schematic diagram illustrating a secure element 300 for a key fob for accessing a vehicle in accordance with the present disclosure. The secure element 300 of the key fob may also be referred to as a multi-OS secure element. The secure element 300 comprises a microcontroller unit 301 that is "secure" and tamper resistant.

The secure element 300 further includes a non-volatile memory module 302 communicably coupled to the microcontroller unit 301. The non-volatile memory module 302 is configured to store a first system software for running a first vehicle access application and a second system software for running a second vehicle access application.

In this example, the non-volatile memory module 302 is a flash memory module including two distinct secure flash memory areas that are separated by a firewall. In other words, the non-volatile memory module 302 separates the security domain used for LF-based vehicle access from the security domain used for smart car access with a firewall. In other examples, the flash memory module may include two distinct flash memory units that are physically separate. That is, the secure flash memory areas or the separate flash memory units securely store separate system software, such as operating systems, for running separate vehicle access applications associated with different vehicle access technologies/protocols.

In this example, the first system software is an operating system configured to run a "smart" vehicle access application. For example, the first system software may be a JavaCard-based OS. The second system software is firmware, a state machine, or an operating system configured to run a "classic" vehicle access application. For example, the second system software may be a simple state machine or a simple operating system. In this context, the firmware, the "simple" operating system or the "simple" state machine is one which, compared to a JavaCard-based OS, has limited functionality and limited hardware support.

The secure element 300 further includes one or more secure hardware blocks 310 communicably coupled with the microcontroller unit 301. In this example, said hardware blocks include a cyclic redundancy check (CRC) block 311, a true random number generator (TRNG) block 312, a symmetrical cryptographic block 313, an asymmetrical cryptographic block 314, and a watchdog timer block 315. Other security features 316 may be implemented in one or more additional hardware blocks 316.

The key fob is configured to operate in a first mode or a second mode. In this example, the first mode can be considered as operating similarly to the smart key fob 110 discussed above with reference to Figure 1b, and the second mode can be considered as operating similarly to the LF key fob 100 as discussed above with reference to Figure 1a.

In the first mode, the microcontroller unit of the secure element is configured to activate the secure hardware blocks 310 and operate at a first clock speed. The secure hardware blocks 310 that are activated are those discussed above, that is the cyclic redundancy check, CRC, block 311, the true random number generator, TRNG, block 312, the symmetrical cryptographic block 313, the asymmetrical cryptographic block 314, the watchdog timer block 315, and any other security feature blocks 316 that are optionally provided. In other examples, activating the secure hardware blocks may further comprise activating the secure hardware blocks with first settings, for example, setting the value of the timer for the watchdog timer 315.

The microcontroller unit 301 is further configured, in the first mode, to boot the first system software. Once the first system software, for example, the JavaCard OS, is booted, the OS can run the relevant applet, e.g. a CCC DK fob applet, and communicate via a relevant interface with relevant host circuitry as will be discussed in greater detail below. The first clock speed supports the operations performed by the secure element when the key fob is operating in the first mode for booting and running the first system software.

In the second mode, the microcontroller unit 302 of the secure element 300 is configured to inhibit activation of one or more of the secure hardware blocks 310 and/or operate at a second clock speed that is lower than the first clock speed. A key fob operating the "classic" LF access technology uses a simpler operating system and therefore requires fewer of the hardware blocks to perform its functionality. Therefore, in the second mode, only a subset of the secure hardware blocks, i.e. those that are uninhibited, are activated. For those secure hardware blocks that are activated in the second mode, the activation may also include, for example, activating one or more of the uninhibited secure hardware blocks with second settings that are different to the first settings, for example setting a timer value for a watchdog timer 315 to a value that is different to the watchdog timer value in the first mode. The timer value for the watchdog timer 315 in the second mode may be lower than the timer value for the watchdog timer 315 in the first mode.

The microcontroller unit 301 is further configured, in the second mode, to boot the second system software. Once the second system software, for example, the native OS, is booted, the OS can run the relevant application, e.g. a classic car access application, and communicate via a relevant interface with relevant host circuitry as will be discussed in greater detail below. When running the native OS, which has limited functionality compared to the JavaCard-based OS, the secure element does not have the same hardware requirements. Therefore, one or more of the secure hardware blocks 310 are inhibited in the second mode of operation, advantageously saving power and optimizing timing of operations. In this example, the asymmetric cryptographic module 314 and the other security features 316 are inhibited. Additionally or alternatively, in the second mode the microcontroller unit 301 is configured to operate at a second clock speed that is lower than the first clock speed, accounting for the limited functionality of the native OS compared to the JavaCard-based OS.

The secure element 300 may further include one or more ROM modules 303 and one or more RAM modules 304. In some examples, when the key fob is operating in the second mode, the microcontroller unit is configured to limit the amount of RAM available to the second system software. The RAM modules can be separated into blocks of RAM that may be individually controlled, activated and deactivated. Therefore, in practice, limiting the amount of RAM available to the second system software may involve configuring a setting of the booted second system software to define the RAM blocks available for use by the second system software.

The secure element may operate in only one of the first mode or the second mode at any one time. Selection of one of the modes is facilitated by a boot select flag 305 which may be set by an external signal such as a signal received on a select pin. Alternatively, the boot select flag 305 value may be set by an SPI chip select (SPI CS) check. That is, a chip select pin of SPI pins can be used as an external source to indicate which mode should be used. The boot select flag 305 may have a default value that sets a default mode of the key fob. This default value may also be referred to as a "priority" or "prior".

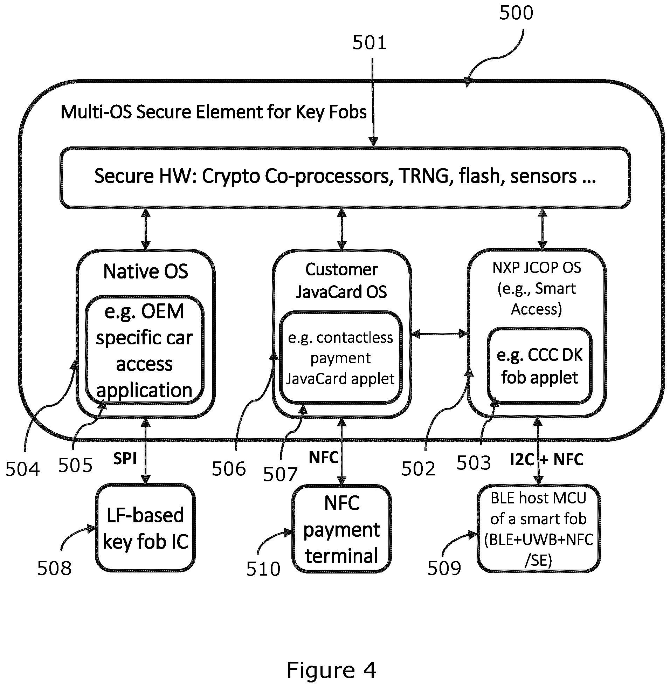

It will be appreciated that the key fob is not necessarily limited to operating in only two distinct modes. The non-volatile memory module may be further configured to store a third system software for running a third application and the key fob may be further configured to operate in a third mode. In the third mode, the microcontroller unit 301 is configured to activate the secure hardware blocks, operate at a third clock speed, and boot the third system software. In an example, the third system software is configured to run a third vehicle access application. In an alternative example, the third system software is configured to run a contactless payment applet. In this way, the multi-OS secure element provides enhanced system security for multi-application key fobs (e.g. key fobs that support all of classic car access, NFC payment, and CCC DK fob, as will be discussed below with reference to Figure 4). The optimized OS behaviour can make the system more robust and efficient. e.g. giving priority for a payment transaction over car access (unintended) ranging.

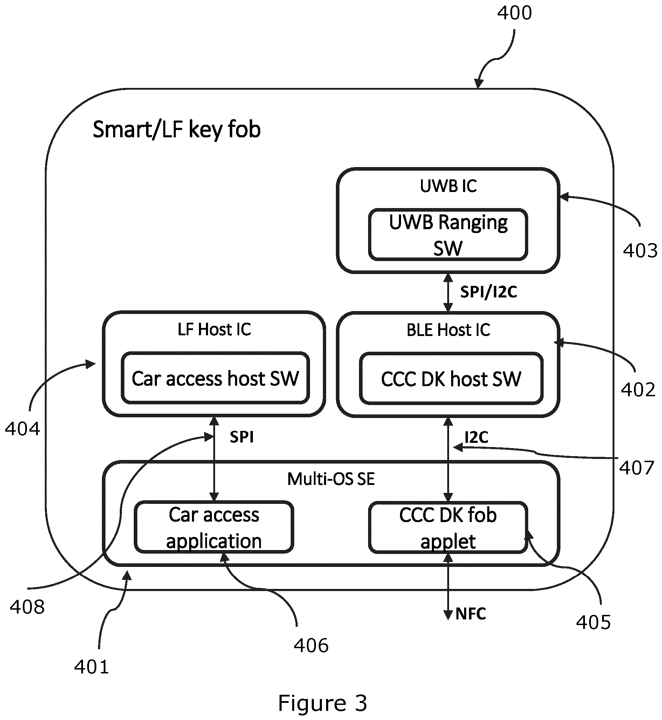

The secure element 300 may further include a plurality of communication interface drivers communicably coupled to the microcontroller unit 301 to allow system software to communicate with host circuitry, as will be discussed below with reference to Figures 3 and 4. The secure element 300 in this example includes an I2C driver 306, an SPI driver 307, and an NFC driver 308. The I2C driver 306 is configured to facilitate communication over an I2C communication interface, the SPI driver 307 is configured to facilitate communication over an SPI communication interface, and the NFC driver 308 is configured to facilitate communication over an NFC communication interface. For example: when the key fob is operating in the first mode, the microcontroller unit 301 is configured to activate the I2C driver 306, and when the key fob is operating in the second mode, the microcontroller unit 301 is configured to activate the SPI driver 307. In this way, the multi-OS secure element 300 enables a distinct interface to be only used for a specific OS configuration. With that, system security is enhanced because an attack on one interface would not impact an application running on an OS that is not associated with that interface.

Figure 3 is a block diagram illustrating a key fob 400 including an example of a multi-OS secure element 401 similar to the secure element described above with reference to Figure 2. The key fob 400 further includes first host circuitry configured to communicate with the vehicle using a first vehicle access protocol and second host circuitry configured to communicate with the vehicle using a second vehicle access protocol. The second vehicle access protocol is different from the first vehicle access protocol. The first host circuitry may be configured to communicate with the vehicle using one or more of near field communication, NFC, Bluetooth Low Energy, BLE, and ultra-wideband, UWB. The second host circuitry may be configured to communicate with the vehicle using low frequency, LF, signals, such as radio frequency, RF, signals. In this example, the first host circuitry comprises a Bluetooth Low Energy host IC 402 and a UWB IC 403, and the second host circuitry comprises an LF host IC 404.

When the key fob 400 is operating in the first mode, the first system software - that is, as described in an example above with reference to Figure 2, a JavaCard-based OS which is configured to run a "smart" fob applet, i.e. a smartphone-based vehicle access applet, such as a CCC DK fob applet 405, - communicates with the Bluetooth Low Energy IC 402 over a first communication interface. In this example, the first communication interface is an I2C interface 407 but could alternatively be an NFC interface, or a combination of both may be used. That is, with reference to Figure 2, the secure element 401 activates the I2C driver 306 when the key fob 400 is operating in the first mode such that the JavaCard-based OS running the smart fob applet 405 can communicate, over the I2C interface 407, with the BLE host IC 402 running the smart host software (such as CCC DK host software).

When the key fob 400 is operating in the second mode, the second system software - that is, as described in an example above with reference to Figure 2, a simple state machine or simple operating system that is configured to run a classic vehicle access application 406 - communicates with the LF host IC 404 over a second communication interface. The second communication interface is different from the first communication interface. In this example, the second communication interface is an SPI interface 408. That is, with reference to Figure 2, the secure element 401 activates the SPI driver 307 when the key fob 400 is operating in the second mode such that the native OS running the classic LF vehicle access application can communicate, over the SPI interface, with the LF host IC running the vehicle host access software.

Figure 4 is a block diagram illustrating another example of a secure element 500, which is similar to the one described above with reference to Figure 2. The secure element 500 is associated with a key fob, not pictured. In this example, the secure element comprises three different software systems such that a key fob associated with the secure element 500 is configured to operate in one of three distinct modes. As described above with reference to Figure 2, the secure element 500 includes one or more secure hardware blocks 501.

The secure element further includes a non-volatile memory module, not pictured, configured to store a first JavaCard-based OS 502, which in this example is labelled as an "NXP JCOP OS", configured to run a "smart" vehicle access applet, i.e. smartphone-based vehicle access applet, which in this example is a CCC DK fob applet 503. In the first mode, as discussed above with reference to Figure 2, a microcontroller unit of the key fob associated with the secure element, not pictured, is configured to activate the secure hardware blocks 501, operate at a first clock speed, and boot the JavaCard-based OS 502.

The non-volatile memory module additionally stores a native OS 504 configured to run an OEM-specific vehicle access application 505, which may be a "classic" LF vehicle access application. In the second mode of operation, as discussed above with reference to Figure 2, the microcontroller unit of the key fob associated with the secure element, not pictured, is configured to inhibit activation of one or more of the secure hardware blocks 501 and/or operate at a second clock speed, and boot the native OS 504.

Additionally, the non-volatile memory module stores a second JavaCard-based OS 506, which in this example is labelled as a "Customer JavaCard OS", which is configured to run a contactless payment JavaCard applet 507. In a third mode of operation, the microcontroller unit of the key fob associated with the secure element, not pictured, is configured to activate the secure hardware blocks 501 and/or operate at a third clock speed, and boot the JavaCard-based OS 506. The second JavaCard-based OS 506 (labelled "Customer JavaCard OS") may be configured differently from the first JavaCard-based OS 502 (labelled "NXP JCOP OS").

As discussed above with reference to Figure 2, the secure hardware blocks and the non-volatile memory module are communicably coupled to the microcontroller unit of the secure element such that the system software, i.e. the operating systems, may communicate and/or exchange data with the secure hardware blocks.

Also illustrated in Figure 4 are host circuitry including an LF-based key fob IC 508, a BLE host MCU of a smart fob 509, and an NFC payment terminal 510. The native OS communicates with the LF based key fob IC 508 via an SPI interface. The first JavaCard-based OS 502 communicates with the BLE host MCU via an I2C and/or an NFC interface. The LF-based key fob IC 508 and the BLE host MCU 509 are features of a key fob associated with the secure element 500. The second JavaCard OS 506 communicates with an NFC payment terminal 510, the NFC payment terminal 510 being external to a key fob associated with the secure element, via an NFC interface. That is, the secure element 500 illustrated in Figure 4 supports a multi-application key fob capable of accessing a vehicle using one of LF-based vehicle access technology or smart vehicle access technology and additionally capable of performing contactless payments.

A key fob similar to the key fob described above with reference to Figure 3 may be provided with the multi-OS secure element of Figure 4 described above.

The instructions and/or flowchart steps in the above figures can be executed in any order, unless a specific order is explicitly stated. Also, those skilled in the art will recognize that while one example set of instructions/method has been discussed, the material in this specification can be combined in a variety of ways to yield other examples as well, and are to be understood within a context provided by this detailed description.

In some example embodiments the set of instructions/method steps described above are implemented as functional and software instructions embodied as a set of executable instructions which are effected on a computer or machine which is programmed with and controlled by said executable instructions. Such instructions are loaded for execution on a processor (such as one or more CPUs). The term processor includes microprocessors, microcontrollers, processor modules or subsystems (including one or more microprocessors or microcontrollers), or other control or computing devices. A processor can refer to a single component or to plural components.

In other examples, the set of instructions/methods illustrated herein and data and instructions associated therewith are stored in respective storage devices, which are implemented as one or more non-transient machine or computer-readable or computer-usable storage media or mediums. Such computer-readable or computer usable storage medium or media is (are) considered to be part of an article (or article of manufacture). An article or article of manufacture can refer to any manufactured single component or multiple components. The non-transient machine or computer usable media or mediums as defined herein excludes signals, but such media or mediums may be capable of receiving and processing information from signals and/or other transient mediums.

Example embodiments of the material discussed in this specification can be implemented in whole or in part through network, computer, or data based devices and/or services. These may include cloud, internet, intranet, mobile, desktop, processor, look-up table, microcontroller, consumer equipment, infrastructure, or other enabling devices and services. As may be used herein and in the claims, the following non-exclusive definitions are provided.

In one example, one or more instructions or steps discussed herein are automated. The terms automated or automatically (and like variations thereof) mean controlled operation of an apparatus, system, and/or process using computers and/or mechanical/electrical devices without the necessity of human intervention, observation, effort and/or decision.

It will be appreciated that any components said to be coupled may be coupled or connected either directly or indirectly. In the case of indirect coupling, additional components may be located between the two components that are said to be coupled.

In this specification, example embodiments have been presented in terms of a selected set of details. However, a person of ordinary skill in the art would understand that many other example embodiments may be practiced which include a different selected set of these details. It is intended that the following claims cover all possible example embodiments.

## Claims

1. A key fob for accessing a vehicle, wherein the key fob comprises:
a secure element comprising:
a microcontroller unit;
a non-volatile memory module communicably coupled to the microcontroller unit, the non-volatile memory module configured to store a first system software for running a first vehicle access application and a second system software for running a second vehicle access application; and
one or more secure hardware blocks communicably coupled
with the microcontroller unit;
wherein the key fob is configured to operate in a first mode or second mode, wherein, in the first mode, the microcontroller unit is configured to:
activate the secure hardware blocks;
operate at a first clock speed; and
boot the first system software; and
in the second mode, the microcontroller unit is configured to:
inhibit activation of one or more of the secure hardware blocks and/or operate at a second clock speed that is lower than the first clock speed; and
boot the second system software.

2. The key fob of claim 1, wherein, in the first mode, the microcontroller unit is configured to activate the secure hardware blocks with first settings and, in the second mode, the microcontroller unit is further configured to activate one or more of the uninhibited secure hardware blocks with second settings that are different to the first settings.

3. The key fob of claim 1 or claim 2, wherein the first system software is an operating system configured to run a smart vehicle access application, and the second system software is firmware configured to run a low frequency, LF, vehicle access application.

4. The key fob of any of claims 1-3, wherein the non-volatile memory module is further configured to store a third system software for running a third application and the key fob is further configured to operate in a third mode, wherein, in the third mode, the microcontroller unit is configured to activate the secure hardware blocks, operate at a third clock speed, and boot a third system software.

5. The key fob of any preceding claim, wherein the key fob further comprises:
first host circuitry configured to communicate with the vehicle using a first vehicle access protocol;
second host circuitry configured to communicate with the vehicle using a second vehicle access protocol different from the first vehicle access protocol;
wherein, in the first mode, the first system software communicates with the first host circuitry over a first communication interface and, in the second mode, the second system software communicates with the second host circuitry over a second communication interface different from the first communication interface.

6. The key fob of claim 5, wherein the first host circuitry is configured to communicate with the vehicle using one or more of near field communication, NFC, Bluetooth Low Energy, BLE, and ultra-wideband, UWB, and the second host circuitry is configured to communicate with the vehicle using low frequency, LF, signals.

7. The key fob of claim 5 or 6, wherein the secure element further comprises a first communication interface driver configured to facilitate communication over the first communication interface and a second communication interface driver configured to facilitate communication over the second communication interface, the first and second communication interface drivers being communicably coupled to the microcontroller unit, wherein in the first mode the microcontroller unit is configured to activate the first communication interface driver and in the second mode the microcontroller unit is configured to activate the second communication interface driver.

8. The key fob of any of claims 5-7, wherein the first communication interface comprises one of an I2C interface and an NFC interface and the second communication interface comprises an SPI interface.

9. The key fob of any of claims 5-8, wherein the first host circuitry comprises one or more of smartphone-based vehicle access host software, UWB ranging software, and NFC terminal software and the second host circuitry comprises low frequency, LF, car access host software.

10. The key fob of any preceding claim, wherein the key fob is configured to receive a signal which sets one of the first mode or the second mode as a default mode.

11. The key fob of any preceding claim, wherein the non-volatile memory module comprises a single non-volatile memory unit configured to store the first system software in a first secure memory area and the second system software in a second secure memory area.

12. The key fob of claim 11, wherein the first secure memory area and the second secure memory area are separated by a firewall.

13. The key fob of claims 1-10, wherein the non-volatile memory module comprises a first non-volatile memory unit for storing the first system software and a second non-volatile memory unit for storing the second system software.

14. The key fob of any preceding claim, wherein the secure hardware blocks comprise one or more of: a cyclic redundancy check, CRC, block, a true random number generator, TRNG, block, a cryptographical block, and a watchdog timer block.

15. The key fob of any preceding claim, wherein the secure element further comprises a RAM module and, in the second mode, the microcontroller is configured to limit the amount of RAM available to the second system software.

## Amended claims

### Amended claims in accordance with Rule 137(2) EPC.

1. A key fob for accessing a vehicle, wherein the key fob comprises:
a secure element comprising:
a microcontroller unit;
a non-volatile memory module communicably coupled to the microcontroller unit, the non-volatile memory module configured to store a first system software for running a first vehicle access application and a second system software for running a second vehicle access application; and
one or more secure hardware blocks communicably coupled
with the microcontroller unit;
wherein the key fob is configured to operate in a first mode or second mode, wherein, in the first mode, the microcontroller unit is configured to:
activate the secure hardware blocks;
operate at a first clock speed; and
boot the first system software; and
in the second mode, the microcontroller unit is configured to:
inhibit activation of one or more of the secure hardware blocks and/or operate at a second clock speed that is lower than the first clock speed; and
boot the second system software;
wherein the first system software is an operating system configured to run a smart vehicle access application, and the second system software is firmware configured to run a low frequency, LF, vehicle access application; and
wherein the key fob is configured to receive a signal which sets one of the first mode or the second mode as a default mode.

2. The key fob of claim 1, wherein, in the first mode, the microcontroller unit is configured to activate the secure hardware blocks with first settings and, in the second mode, the microcontroller unit is further configured to activate one or more of the uninhibited secure hardware blocks with second settings that are different to the first settings.

3. The key fob of claim 1 or claim 2, wherein the non-volatile memory module is further configured to store a third system software for running a third application and the key fob is further configured to operate in a third mode, wherein, in the third mode, the microcontroller unit is configured to activate the secure hardware blocks, operate at a third clock speed, and boot a third system software.

4. The key fob of any preceding claim, wherein the key fob further comprises:
first host circuitry configured to communicate with the vehicle using a first vehicle access protocol;
second host circuitry configured to communicate with the vehicle using a second vehicle access protocol different from the first vehicle access protocol;
wherein, in the first mode, the first system software communicates with the first host circuitry over a first communication interface and, in the second mode, the second system software communicates with the second host circuitry over a second communication interface different from the first communication interface.

5. The key fob of claim 4, wherein the first host circuitry is configured to communicate with the vehicle using one or more of near field communication, NFC, Bluetooth Low Energy, BLE, and ultra-wideband, UWB, and the second host circuitry is configured to communicate with the vehicle using low frequency, LF, signals.

6. The key fob of claim 4 or 5, wherein the secure element further comprises a first communication interface driver configured to facilitate communication over the first communication interface and a second communication interface driver configured to facilitate communication over the second communication interface, the first and second communication interface drivers being communicably coupled to the microcontroller unit, wherein in the first mode the microcontroller unit is configured to activate the first communication interface driver and in the second mode the microcontroller unit is configured to activate the second communication interface driver.

7. The key fob of any of claims 4-6, wherein the first communication interface comprises one of an I2C interface and an NFC interface and the second communication interface comprises an SPI interface.

8. The key fob of any of claims 4-7, wherein the first host circuitry comprises one or more of smartphone-based vehicle access host software, UWB ranging software, and NFC terminal software and the second host circuitry comprises low frequency, LF, car access host software.

9. The key fob of any preceding claim, wherein the non-volatile memory module comprises a single non-volatile memory unit configured to store the first system software in a first secure memory area and the second system software in a second secure memory area.

10. The key fob of claim 9, wherein the first secure memory area and the second secure memory area are separated by a firewall.

11. The key fob of claims 1-9, wherein the non-volatile memory module comprises a first non-volatile memory unit for storing the first system software and a second non-volatile memory unit for storing the second system software.

12. The key fob of any preceding claim, wherein the secure hardware blocks comprise one or more of: a cyclic redundancy check, CRC, block, a true random number generator, TRNG, block, a cryptographical block, and a watchdog timer block.

13. The key fob of any preceding claim, wherein the secure element further comprises a RAM module and, in the second mode, the microcontroller is configured to limit the amount of RAM available to the second system software.
